# FASCICULE DE BREVET EUROPEEN

(11) **EP 2 261 057 B1**
(45) Date de publication et mention de la délivrance du brevet: **23.12.2015**
(21) Numéro de dépôt: 10165308.7
(22) Date de dépôt: 08.06.2010
(51) Int. Cl.: B44F 1/04, B05D 5/12, B64C 1/06, B64C 1/12

(54) **Procédé de repérage et de protection de métallisations de sous ensembles et structures aéronautiques**
Verfahren zum Kennzeichnen und zum Schutz von Metallisierungen von Luftfahrt-Unterbaugruppen und -Strukturen
Method for marking and protecting the metal plating of aeronautical structures and subassemblies.

(30) Priorité: 09.06.2009 FR 0953824
(43) Date de publication de la demande: 15.12.2010
(73) Titulaire: Socata, 65290 Louey (FR)
(72) Inventeur: Soucaze-Soudat, Jean-Dominique, 65710 Campan (FR); Pages, Francis, 65500 Marsac (FR)
(74) Mandataire: Ipside

(56) Documents cités:
- FR-A- 2 914 622
- US-A- 4 599 255
- US-A- 6 102 662

## Description

La présente invention concerne un procédé de repérage et de protection de métallisations de sous ensembles et structures aéronautiques.

Les métallisations de sous ensembles ou structures aéronautiques consistent à effectuer des opérations destinées à faciliter la liaison et le passage de courants électriques entre les différentes pièces métalliques constituant un aéronef, en vue d'obtenir une répartition sûre des charges et intensités. Dans le cadre de la réalisation de ces métallisations, pour satisfaire les demandes des compagnies aériennes, il est nécessaire de s'assurer du repérage de toutes les fixations métallisées, et seulement de celles ci, ainsi que de leur protection.

Les constructeurs de pièces élémentaires et d'éléments d'assemblage de structures d'aéronefs utilisent des métaux issus de la bauxite qui, après électrolyse et divers traitements, est ensuite convertie en matériau dénommé usuellement aluminium. Ce produit est fabriqué en différentes formes, par exemple en rond, plat, feuilles.

On relève plusieurs sortes d'aluminiums dont la consistance est variable. Il existe des aluminiums dénommés 2017, 2024, 6061, 6081, 7075 qui se présentent aussi sous forme de matériau plaqué : 2017 A T3, 2024 A5 T3/T4, 7075 A5 T6 ou T76. Le plaqué est réalisé par adjonction d'un film d'aluminium pur de 2 à 4% sur chaque face. Il est aussi utilisé des métaux ou aciers qui ne sont pas à base d'aluminium, voire des composites plastiques.

Les produits ci dessus décrits sont ensuite mis en forme, soit de manière directe par pliage ou enlèvement de matière, perçage, détourage, soit après traitement thermique de recuit afin de pouvoir effectuer des pliages nécessaires à la mise en forme finale de chaque pièce élémentaire.

Une fois que la forme des pièces est devenue définitive, les opérateurs procèdent aux opérations de protection de ces pièces élémentaires en leur faisant subir des opérations d'oxydation anodique chromique, colmatée ou non. Après ce traitement initial d'oxydation, et dans un délai de 16 heures, il est procédé au revêtement soit d'une couche de primaire et couche de peinture de finition, soit d'une couche de primaire seule.

Si elle est colmatée, l'oxydation anodique chromique est une barrière anticorrosion, et si elle n'est pas colmatée, elle sert de base d'accroche de peinture. Le primaire a aussi deux propriétés, celle d'anticorrosion et celle d'accrochage de la peinture.

Les pièces ainsi traitées sont ensuite positionnées pour assemblage dans des outillages spécifiques à formes géométriques connues. Les procédés d'assemblage usuels sont des modes de fixation connus, comme du rivetage, du serrage ou autres modes de liaison définitive ou pas.

L'opération de métallisation elle même consiste à raviver le matériau métallique lors de la préparation de la fixation, à apposer dans son sein une substance neutre, à titre d'exemple du produit commercialisé sous la marque déposée VASELINE, et à réaliser la fixation par rivetage, serrage ou autre, et ce par rivets de différents types ou par utilisation de visserie adaptée. Cette opération de métallisation n'est pas effectuée sur toutes les fixations, mais seulement sur certaines, à des distances définies.

La protection de la métallisation consiste à recouvrir cette dernière d'une couche de produit, projeté, dont une des propriétés est de l'isoler du milieu ambiant, qu'il soit agressif ou pas. Dans le passé, les produits étaient soit des vernis particuliers, soit des peintures spécifiques, la tendance actuelle étant à la peinture ordinaire utilisée pour la zone de l'avion concernée mais colorée par addition de pigments usuellement de couleur bleue.

Pour effectuer l'opération de repérage de métallisation, préalablement à la réalisation de la protection, actuellement, l'opérateur procède à l'apposition de peintures ou vernis colorés qu'il dispose soit sur les extrémités du rivet une fois posé, soit sur la visserie. Pour éviter que ce repérage coloré ne disparaisse lors des opérations de peinture suivantes, après séchage de la couche colorée, il est apposé manuellement une pastille autocollante de masquage, en papier. Lors de l'opération de peinture qui suit, la couche de peinture projetée se dépose en partie sur la pastille de papier et en partie sur les pièces assemblées. Les peintures utilisées en aéronautique sont de deux types, hydrodiluable ou solvantée. Les épaisseurs usuelles de chaque couche de peinture varient de 10 à 30 micromètres et ce pour tous les types de peintures.

Après peinture ou pose de vernis spécifique, sur les pièces et les pastilles autocollantes, il est nécessaire d'observer un temps de séchage.

La pastille de papier est ensuite retirée manuellement après séchage de la peinture. Les opérations de pose et de dépose des pastilles autocollantes sont longues, fastidieuses, onéreuses et nécessitent de nombreuses retouches ultérieures pour pallier aux défauts de protection constatés et générés par cette méthode. On trouve fréquemment des défauts de recouvrements, arrachements partiels de repérage coloré, oublis de dépose de pastilles, rayures lors des opérations de dépose etc. Le défaut le plus récurent constaté dans les fabrications actuelles est l'absence quasi systématique de peinture sous la partie masquée. Ce défaut est illustré notamment dans le cas du montage des écrous à river qui ne sont pas peints avant montage. Ainsi, le masquage qui suit l'apposition de peinture colorée sur les rivures génère des zones non peintes et donc non protégées, à cause de pastilles trop grandes, souvent non adaptées. Pour éviter ce défaut, il faudrait que l'opérateur de peinture fasse une action de contournement de la fixation pour que le jet de peinture soit uniformément réparti jusque au dessous de la pastille en papier, ce qui est pratiquement impossible à réaliser, sauf à passer un temps important en retouches peintures ayant pour conséquence d'augmenter aussi localement l'épaisseur de peinture.

Généralement, l'opérateur qui réalise la métallisation n'est pas le même que celui qui réalise la protection par peinture et, de ce fait, on constate fréquemment un état de confusion et de non compréhension entre les deux opérateurs, au moins, ces confusions amenant en fait à la re consultation de plans et fiches techniques pour effectuer des corrections et obtenir un produit acceptable.

Il existe aussi une autre méthode de masquage par utilisation de ruban adhésif posé en continu ou bien par découpe et pose de papier autocollant, par exemple, celui commercialisé sous la marque déposée KRAFT.

Les métallisations sont effectuées sur des assemblages métal/métal ou métal/composite ou composite conducteur/composite conducteur ou autre organisation structurelle d'assemblage.

Les opérations de métallisations connues et présentées ci-dessus sont régies par des normes internationales et françaises, notamment la norme AECMA prEN3371 et la norme NF L50-070.

La présente invention se propose de remédier aux inconvénients précités des procédés connus et présentés ci-dessus de repérage et protection de métallisations, en proposant un procédé de repérage et de protection de métallisations simple, efficace et rapide à mettre en oeuvre. En particulier, l'invention se propose d'éviter l'absence quasi-systématique de peinture sous la partie masquée.

Dans ce but, la présente invention se rapporte à un procédé de repérage et de protection de métallisations de sous ensembles et structures aéronautiques selon la revendication 1. Des modes de mise en oeuvre avantageux du procédé font l'objet des revendications dépendantes 2 à 10.

Ainsi, avantageusement et économiquement :
- l'opération de repérage de métallisation est réalisée par marquage lors de l'apposition d'un repère type au voisinage immédiat de la métallisation par simple dépôt d'une couche d'encre spécifique, colorée, de forme remarquable, cette opération étant effectuée par l'opérateur réalisant le totalité de la fixation, pour assurer la traçabilité,
- l'opération de peinture ultérieure est effectuée sans aucun masquage, en couvrant largement toute la surface, sans précaution particulière, optimisant de fait la présence d'une couche de protection uniforme et ce sans contre dépouille de projection dues aux protections temporaires,
- après application et séchage, la couleur d'encre déposée préalablement transparaît visuellement et définitivement au travers de la ou des couches de peinture déposées.

On comprendra mieux la présente invention à la lecture de la description détaillée qui va suivre en regard du dessin annexé et donnant à titre indicatif mais nullement limitatif une forme de réalisation de l'invention.

Sur le dessin :

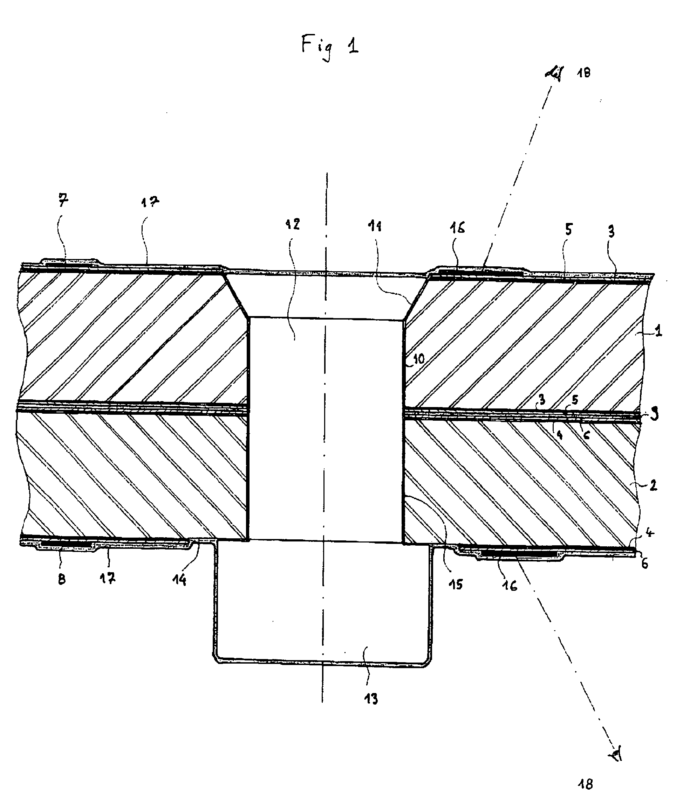

La figure 1 représente, à échelle agrandie une vue schématique de l'ensemble des opérations à réaliser lors de la mise en oeuvre du procédé.

En référence à la figure 1, le procédé est applicable en général à la réalisation de repérage et de protection de métallisations de sous-ensembles et structures aéronautiques.

Lorsqu'il procède à une opération d'assemblage, l'opérateur commence par sa préparation. Pour cela, il ajuste deux pièces simples 1 et 2 déjà préparées, lesquelles sont aux formes géométriques et définitives de pièces élémentaires, traitements thermiques et traitement de surface effectués. Les opérations précédentes sont validées et contrôlées au préalable dans la chaîne de fabrication par des contrôles intermédiaires dits de pièces élémentaires. Ces contrôles permettent de s'assurer que les pièces simples des assemblages sont réalisées suivant les règles de l'art usuellement appliquées dans l'industrie aéronautique. A la fin de leur mise en forme, les pièces élémentaires sont revêtues de couche primaire 3 et 4, d'une couche de peinture 5 et 6 et d'un marquage individuel 7 et 8 permettant de les identifier. Dans certains cas de fabrications particulières, elles peuvent parfois ne pas être revêtues de la couche de peinture 5 ou 6 voire 5 et 6.

L'opérateur assemblant les pièces élémentaires 1 et 2 va d'abord effectuer l'accostage avec interposition ou non de joint de produit souple, mastic d'interposition 9 dénommé usuellement PR. L'accostage étant effectué, avec aide d'outillage spécifique, par exemple épingles à visser ou à ressort, ou bien sans outillage, il est ensuite procédé au perçage et à l'alésage de trous lisses 10 au diamètre définitif ainsi qu'a la réalisation de la fraisure 11, dans le cas de rivets à tête fraisée, pour mise en place du rivet 12. Cette opération peut être aussi effectuée par outil étagé ou outil de forme dit forêt fraisurant. Pour raviver la surface coté rivure 13, avant assemblage, il est procédé au préalable à la réalisation d'une surface décapée 14 par décapage mécanique à l'aide d'une brosse rotative. Le décapage doit être très léger, sans arrachement de matière.

Les éléments composant l'assemblage sont ensuite réunis par l'opérateur, définitivement, en vue de la pose de la fixation. Dans notre exemple illustré , la fixation se fera au moyen d'écrasement de rivet 12.

Avant d'introduire le rivet 12 dans le trou lisse 10, il est inséré dans ce dernier un produit neutre 15 qui a pour but de neutraliser les effets induits pouvant être générés par les couples électrochimiques des divers matériaux en présence, et qui, à titre d'exemple, peut être de la substance commercialisée sous le nom de marque VASELINE. Ces effets induits sont constitués notamment par l'amorce de couples électrolytiques qui occasionnent des oxydations ponctuelles des métaux. Au fil du temps, ces oxydations peuvent dégrader les caractéristiques mécaniques requises. Le rivet 12 étant ensuite introduit, il est rivé par des moyens de frappe ordinaires utilisés dans l'industrie aéronautique.

Pour indiquer que la métallisation est correctement effectuée, il est apposé manuellement ou avec outil semi automatique à proximité immédiate de la métallisation une ou plusieurs marques caractéristiques 16 constituées d'encre colorée à séchage rapide. Ces marques peuvent être attribuées à tel ou tel réalisateur de métallisation.

Après réalisation des opérations de métallisation et de repérage effectuées comme décrit ci dessus, rapidement, par exemple dans les seize heures à partir de la réalisation du ravivage du métal par perçage, alésage et rivure, la protection doit être effectuée par apposition d'un voile de peinture de protection 17 sans aucune protection particulière ni masquage ni démasquage d'aucune sorte. Le recouvrement croisé de zones et couches de peinture ainsi que la présence de zones d'épaisseurs de couche maxi sont particulièrement exclus afin d'obtenir un gain de poids de peinture lequel est inclus dans le poids final de l'aéronef. La marque caractéristique 16 de repérage de métallisation est visible et reconnaissable par l'oeil humain 18 ou par tout appareillage optique spécialisé dans la reconnaissance de vision industrielle, et ce par effet de transparence visuelle directe au travers de la couche de peinture 17.

Du fait de cette transparence fonctionnelle requise au travers de la couche de peinture de protection 17, les peintres, personnels opérateurs responsables de la pose manuelle de la couche de peinture sont automatiquement sensibilisés à l'épaisseur de couche déposée par eux même. Cette sensibilisation à la transparence et aux épaisseurs de couche de peinture normalement admissibles sont une source de gains de poids des pièces ou sous ensembles et, au final, elle contribue à l'allègement de poids de l'aéronef terminé, prêt à voler. Ces éléments contribuent aussi à la qualité générale des métallisations, repérages et protections de celles ci.

Il est possible d'effectuer des repérages de métallisation par marque caractéristique 16 suivant plusieurs couleurs, ces appositions pouvant être affectées à tel ou tel organisme ou atelier ou usine en fonction d'un tableau de couleurs et de formes de comparaison à définir au préalable.

Le procédé est aussi applicable à des stades intermédiaires de fabrication ( non représenté dans la figure 1). Par exemple lorsque la couche de primaire 3, 4 a été posée et avant la pose de la couche de peinture 5, 6 qui deviendra de fait définitive. Dans ce cas précis, une couche de peinture au moins est économisée, allégeant d'autant le poids final de l'aéronef.

Une fois réalisées, à divers stades de fabrication de l'aéronef et de ses composants, structures, ensembles et sous ensembles, les métallisations font l'objet de contrôles électriques au moyen d'instrument spécifique dénommé milliohmmètre. Lors de ces contrôles, la mise à la masse des équipements et appareillages, l'écoulement des charges électrostatiques, la conductibilité de la structure voire la mise à la terre sont vérifiés, entre autres.

La présente invention est avantageuse du fait que l'on obtient une haute qualité de repérage, une très bonne protection, une traçabilité et un gain de poids final de l'aéronef, et ce en augmentant la propreté, sans retouche ni surcharge, sans nocivité, avec un meilleur respect des délais, un gain de temps et une meilleure traçabilité.

## Revendications

1. Procédé de repérage et de protection de métallisations de sous ensembles et de structures aéronautiques **caractérisé en ce que** :
- une opération de repérage par marquage est réalisée par apposition, au voisinage de la métallisation, d'au moins un repérage par marquage (16) constitué d'au moins une couche d'encre,
- il n'est pas procédé à un masquage physique de repérage de métallisation,
- la métallisation est ensuite protégée et entièrement recouverte par une seule couche de peinture uniforme (17), en couvrant largement toute la surface, sans précaution particulière,
- après séchage l'encre de repérage (16), déposée préalablement dans l'opération de repérage, transparaît visuellement (18) et définitivement au travers de la couche de peinture déposée (17).

2. Procédé selon la revendication 1 **caractérisé en ce que** ledit marquage (16) apposé est d'une forme caractéristique, particulière.

3. Procédé selon l'une quelconque des revendications 1 et 2 **caractérisé en ce que** ledit marquage (16) est constitué d'une encre de couleur.

4. Procédé selon l'une quelconque des revendications 1 à 3 **caractérisé en ce que** ledit marquage (16) est composé d'une encre à séchage rapide.

5. Procédé selon l'une quelconque des revendications 1 à 4 **caractérisé en ce que** le marquage (16) est apposé au moyen d'un outil manuel ou semi automatique délivrant une faible quantité d'encre.

6. Procédé selon l'une quelconque des revendications 1 à 5, **caractérisé en ce que** l'opération de repérage par marquage (16) est réalisée par l'auteur de la métallisation.

7. Procédé selon l'une quelconque des revendications 1 à 6, lorsque la métallisation nécessite la réalisation d'un trou (10) destiné à recevoir un rivet (12) **caractérisé en ce qu'**on assure, préalablement à l'introduction du rivet (12) dans le trou (10), la mise en place dans le trou (10) d'un produit, tel que de la Vaseline (marque déposée), de neutralisation des effets induits générés par des couples électro-chimiques des divers matériaux en présence.

8. Procédé selon la revendication 7, **caractérisé en ce qu'**il est procédé, avant la réalisation de la rivure (13), à la réalisation d'une surface décapée (14) de la zone de contact, et cette surface décapée (14) est ensuite recouverte de la couche de peinture de protection (17).

9. Procédé selon l'une quelconques des revendications 1 à 8, **caractérisé en ce que** des repérages de métallisation sont effectués par marques caractéristique (16) suivant plusieurs couleurs.

10. Procédé selon l'une quelconque des revendications 1 à 9, **caractérisé en ce qu'**il est applicable après qu'une couche de primaire (3, 4) a été posée, et, éventuellement, avant la pose d'une couche de peinture (5, 6) qui deviendra de fait définitive.

## Patentansprüche

1. Markierungs- und Schutzverfahren für Metallisierungen von Teilsystemen und Strukturen für die Luftfahrt, **dadurch gekennzeichnet, dass**:
- ein Markierungsverfahren durch Aufbringen in der Umgebung der Metallisierung von mindestens einer Kennzeichnung (16) durchgeführt wird, die aus mindestens einer Tintenschicht besteht,
- die Metallisierung zur Kennzeichnung nicht physisch abgedeckt wird,
- die Metallisierung anschließend geschützt und vollständig durch eine einzige einheitliche Farbschicht (17) abgedeckt wird, indem die ganze Oberfläche ohne besondere Vorkehrungen breitflächig abgedeckt wird,
- nach dem Trocknen die Tinte zum Markieren (16), die vorher während des Markierungsverfahrens angebracht wurde, sichtbar (18) und endgültig durch die angebrachte Farbschicht (17) durchscheint.

2. Verfahren nach Anspruch 1, **dadurch gekennzeichnet, dass** die angebrachte Markierung (16) eine besondere, charakteristische Form hat.

3. Verfahren nach einem der Ansprüche 1 und 2, **dadurch gekennzeichnet, dass** die Markierung (16) aus einer farbigen Tinte besteht.

4. Verfahren nach einem der Ansprüche 1 bis 3, **dadurch gekennzeichnet, dass** die Markierung (16) aus einer schnell trocknenden Tinte besteht.

5. Verfahren nach einem der Ansprüche 1 bis 4, **dadurch gekennzeichnet, dass** die Markierung (16) mit einem manuellen oder halb automatischen Werkzeug aufgetragen wird, das nur eine geringe Tintenmenge abgibt.

6. Verfahren nach einem der Ansprüche 1 bis 5, **dadurch gekennzeichnet, dass** das Markierungsverfahren durch Kennzeichnung (16) von der Firma der Metallisierung durchgeführt wird.

7. Verfahren nach einem der Ansprüche 1 bis 6, **dadurch gekennzeichnet, dass** wenn die Metallisierung für die Aufnahme einer Niete (12) das Realisieren eines Loches (10) erfordert, man vor dem Einführen der Niete (12) in das Loch (10) das Anbringen in diesem Loch (10) eines Produkts, wie z. B. Vaselin (geschützte Marke) zum Neutralisieren der durch die elektrochemischen Potenziale der verschiedenen vorhandenen Materialien erzeugten (10) induzierten Effekte gewährleistet.

8. Verfahren nach Anspruch 7, **dadurch gekennzeichnet, dass** vor Durchführung der Nietung (13) eine abgebeizte Oberfläche (14) des Kontaktbereichs hergestellt wird, und diese abgebeizte Oberfläche (14) anschließend mit einer Schutzfarbschicht (17) bedeckt wird.

9. Verfahren nach einem der Ansprüche 1 bis 8, **dadurch gekennzeichnet, dass** die Metallisierungsmarkierungen durch charakteristische Kennzeichen (16) mit mehreren Farben durchgeführt werden.

10. Verfahren nach einem der Ansprüche 1 bis 9, **dadurch gekennzeichnet, dass** es anwendbar ist, nachdem eine Grundierung (3, 4) aufgetragen wurde, und gegebenenfalls vor dem Auftragen einer Farbschicht (5, 6), die faktisch zur endgültigen wird.

## Claims

1. A method for locating and protecting metallic coatings of aircraft subassemblies and structures **characterized in that**:
- A locating operation using marking is carried out by applying at least one locating mark (16) made up of at least one coat of ink near the metallic coating,
- The locating of the metallic coating is not physically masked,
- The metallic coating is then protected and entirely covered by a single uniform coat of paint (17), which covers the whole surface entirely with no particular precaution,
- After drying, the locating ink (16) applied first in the locating operation can be seen visually (18) and permanently through the coat of paint applied (17).

2. A method according to claim 1 **characterized in that** said marking (16) applied has a characteristic and particular shape.

3. A method according to any of claims 1 and 2 **characterized in that** said marking (16) is in colored ink.

4. A method according to any of claims 1 to 3 **characterized in that** said marking (16) is in fast-drying ink.

5. A method according to any of claims 1 to 4 **characterized in that** said marking (16) is applied using a manual or semiautomatic tool that delivers a small quantity of ink.

6. A method according to any of claims 1 to 5 **characterized in that** the locating marking operation (16) is carried out by the person responsible for the metallic coating.

7. A method according to any of claims 1 to 6, when metallic coating makes it necessary to make a hole (10) intended for a rivet (12), **characterized in that**, prior to the insertion of the rivet (12) in the hole (10), a product such as Vaseline (registered trademark) is put in place in the hole (10) for neutralizing the induced effects of the electrochemical couples of the different materials present.

8. A method according to claim 7, **characterized in that** before the rivet seam (13) is made, a stripped surface (14) of the contact zone is made, and that stripped surface (14) is then coated with the coat of protective paint (17).

9. A method according to any of claims 1 to 8, **characterized in that** the metallic coating locations are identified by characteristic marks (16) in several colors.

10. A method according to any of claims 1 to 9, **characterized in that** it is applicable after the application of a coat of primer (3, 4), and possibly before the application of a coat of paint (5, 6) that will ultimately become the final coat.
